# EUROPEAN PATENT APPLICATION

(11) **EP 1 811 390 A1**
(43) Date of publication of application: **25.07.2007**
(21) Application number: 05793424.2
(22) Date of filing: 17.10.2005
(51) Int. Cl.: G06F 13/00

(54) **E-MAIL TRANSMISSION SYSTEM**

(30) Priority: 19.10.2004 JP 2004304512
(71) Applicant: Media Exchange, Inc., Toshima-ku Tokyo 1706010 (JP)
(72) Inventor: YOSHIMURA, Shin, Tokyo 1706010 (JP)
(74) Representative: Johnstone, Douglas Ian
(86) International application number: PCT/JP2005/019012
(87) International publication number: WO 2006/043495

(57) **Abstract**

An e-mail transmission system is provided, in which an overflow of the storage capacity of a second server device by attached files can be prevented, and the attached file within the e-mail can be surely transferred from a first server device to a client connected to a second server device. The first server device 1 of the e-mail transmission system separates the received e-mail into mail main text and attached file, while storing the attached file, and appends the transfer request code of the attached file corresponding to the mail main text to the mail main text, and transfers only the mail main text to the second server device. In this system, when the client 9 connected to the second server device 2 requests the first server device 1 to transfer the attached file by using the transfer request code, the first server device 1. transfers the attached file corresponding to the transfer request code to the client 9.

## Description

### Technical Field

The present invention relates to an e-mail transmission system for transmitting an e-mail from a first server device to a second server device through a network.

### Background Art

In general, there is an e-mail system constituted by an e-mail server and a plurality of e-mail client devices connected to an e-mail server, in which the e-mail server separates the e-mail transmitted from the e-mail client device into a mail main text and an attached file and stores them, and when there is a transfer request of the attached file from the e-mail client to the e-mail server, the e-mail server transfers the attached file to the e-mail client device (see Patent Document 1). The e-mail server, based on the transfer request of the attached file from the e-mail client device, counts the number of requests per a predetermined time for the attached file, and in case the counted number of requests is above a predetermined value, generates and stores a duplicate data of the attached file. The e-mail server, upon receipt of the transfer request of the attached file from the e-mail client device, transfers the attached file or the duplicate data to the e-mail client device. In this system, since the electronic server generates the duplicate data of the attached files only in case the transfer requests of the attached files concentrate in a short period of time, the storage capacity of the e-mail server is not sharply reduced, and concentration of the transfer requests of the attached files can be avoided.
Patent Document 1: Japanese Patent Application Laid-Open No. 2003-333099

### DISCLOSURE OF THE INVENTION

### PROBLEM TO BE SOLVED BY THE INVENTION

In the e-mail transmission system disclosed in the Patent Document 1, in case a plurality of attached files are intensively transmitted in a short period of time from the mail server of information originating side for transmitting predetermined information as e-mails to the e-mail server of this system, these attached files are stored in the e-mail server. In this system, even when the e-mail server does not generate the duplicate data of the attached files, a plurality of attached files transmitted from the mail server of the information originating side are stored in the email server, and therefore, by that fact alone, the storage capacity of the e-mail server is often overflowed. Particularly, since the attached files include data using a lot of the storage capacity such as not only document data and graphic data, but also image data, screen image data, audio data and the like, when the e-mail server stores a plurality of attached files all at once, the storage capacity of the e-mail server is sharply reduced.

An object of the present invention is to provide an e-mail transmission system capable of preventing an overflow of the storage capacity of a second server device by the attached files and surely transferring the attached files within the e-mails to the client connected to the second server device from the first server device.

### MEANS FOR SOLVING PROBLEM

A premise of the present invention for solving the above described problem is an e-mail transmission system constituted by a first server device capable of transmitting and receiving the e-mail formed from a mail main text and an attached file attached to the mail main text and at least one second server device capable of transmitting and receiving the e-mail, in which the first server device transmits the e-mail to the second server device through a network.

The features of the present invention in the above described premise are that the first sever device comprises separation storage means for separating the received e-mail into a mail main text and an attached file, while storing the attached file, code generating means for generating a transfer request code used when the transfer of the attached file is requested to the first server device from the client connected to the second server device, code appending means for appending a transfer request code of the attached file corresponding to the mail main text to the mail main text, and mail main text transmission means for transmitting the mail main text appended with the transfer request code to the second server device. In this system, when the client connected to the second server device requests the first server device to transfer the attached file by using the transfer request code, the first server device transfers the attached file corresponding to the transfer request code to the client.

As an example of the embodiment of the present invention, the first server device comprises attached file removing means for removing the stored attached file after a predetermined period of time elapses from the stored time.

As another example of the embodiment of the present invention, the first server device comprises authentication request means for requesting an authentication procedure to the client for authenticating the transfer of the attached file when there is a transfer request of the attached file from the client.

### EFFECT OF THE INVENTION

According to the e-mail transmission system according to the present invention, within the e-mail, only the mail main text appended with the transfer request code is transmitted from the first server device to the second server device, and therefore, even if the second mail server device intensively receives the e-mails in a short period of time, the storage capacity of the second server device is not sharply reduced, and the overflow of the storage capacity of the second server device can be surely prevented. In this system, the mail main text is appended with the transfer request code of the attached file corresponding to the mail main text, and when the client connected to the second server device requests the first server device to transfer the attached file by using the transfer request code, the first server device transfers the attached file corresponding to the transfer request code to the client, and therefore, not only the mail main text, but also the attached file can be surely read. Further, in this system, since only the mail main text except for the attached file is downloaded for the client from the second server device, a download time can be shortened as compared with the case where the e-mail including the attached file is downloaded.

In the e-mail transmission system in which the first server device comprises the attached file removing means, even if a plurality of attached files are stored by the first sever device, the first sever device removes in order the stored attached files after the elapse of a predetermined period of time from the storing time, and therefore, the overflow of the storage capacity of the first server device by the attached files can be surely prevented.

In the e-mail transmission system comprising the authentication means in which the first server device requests the authentication procedure to the client connected to the second server device for authenticating the transfer of the attached files, since the first server device transfers the attached files only to the predetermined clients having passed the authentication, the attached files are not read by the outsider other than the legitimate system user having passed the authentication.

### BRIEF DESCRIPTION OF THE DRAWINGS

Figure 1 is a block diagram of an e-mail transmission system shown as an example;
Figure 2 is a block diagram of an e-mail transmission system shown as an example; and
Figure 3 is a schematic illustration of the case where an attached file is transferred from a first server device to a second server device.

### EXPLANATIONS OF LETTERS OR NUMERALS

- 1: FIRST SERVER DEVICE
- 2: SECOND SERVER DEVICE
- 3: THIRD SERVER DEVICE
- 4: MAIL SERVER
- 5: WEB SERVER
- 6: INNER ADDRESS FILE
- 7: INNER ADDRESS FILE
- 8: MAIL SERVER
- 9: CLIENT MACHINE (CLIENT)
- 10: INNER ADDRESS FILE
- 11: CLIENT MACHINE

### BEST MODES FOR CARRYING OUT THE INVENTION

Details of an e-mail transmission system according to the present invention will be described below with reference to the attached drawings.

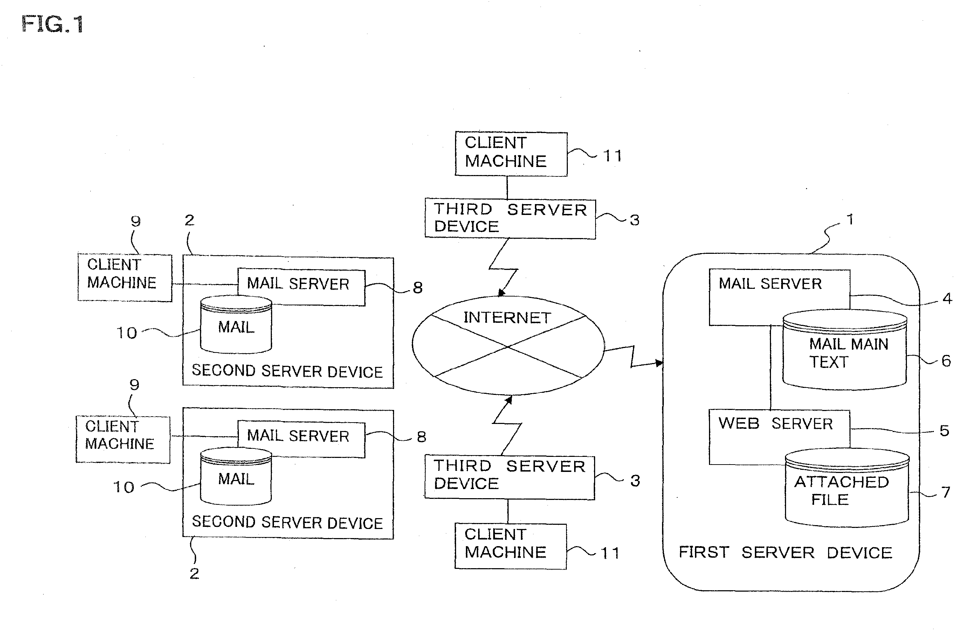

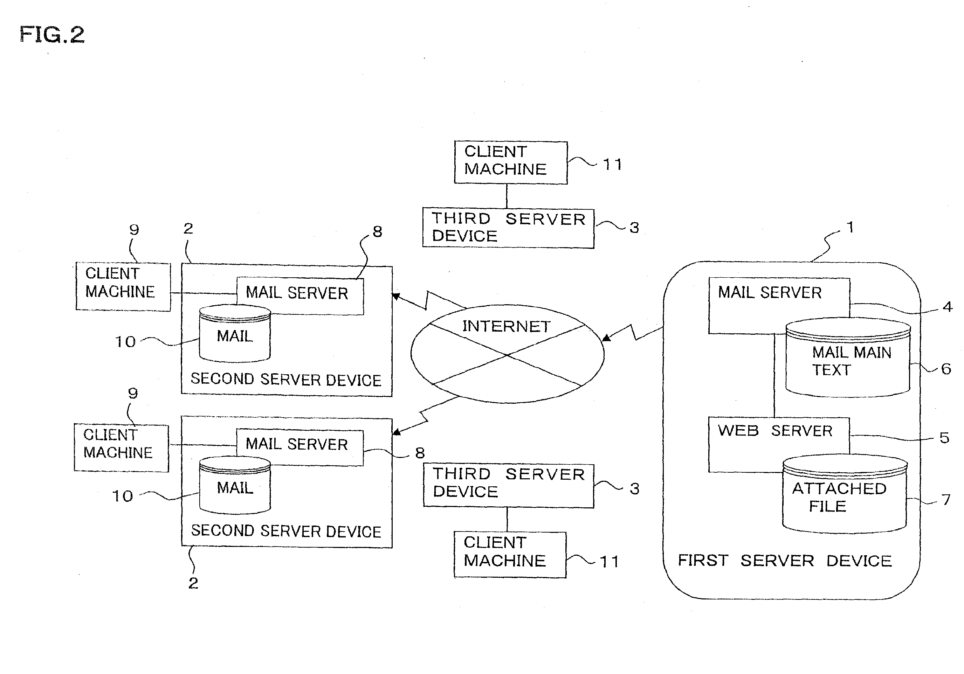

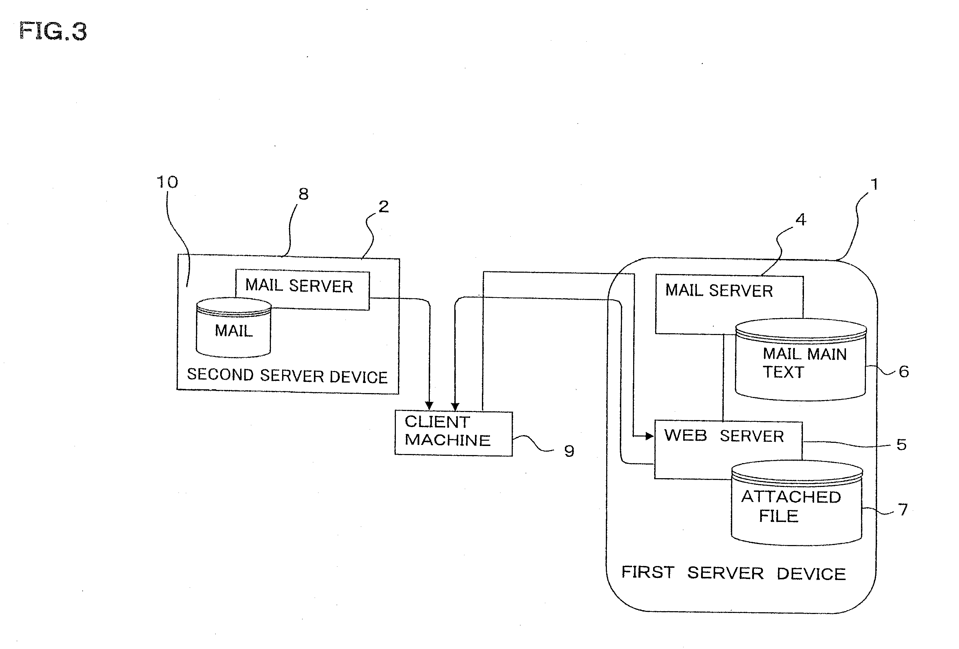

Figures 1 and 2 are block diagrams of the e-mail transmission system shown as an example, and Figure 3 is a schematic illustration of the case where an attached file is transferred from a first server device 1 to a second server device 2. Figure 1 shows the case where the e-mail is transmitted from a third server device 3 to the first server device 1, and Figure 2 shows the case where a mail main text within the e-mail is transmitted from the first server device 1 to the second server device 2. Incidentally, in Figures 1 and 2, while the second server device 2 and the third server device 3 are illustrated in two pieces respectively, no particular limitation is imposed on the number of pieces of server devices 2 and 3, and there are some cases where a plurality of second and third server devices 2 and 3 exceeding 2 pieces exist.

The e-mail transmission system is constituted by the first server device 1 installed at a system manager side and performing the relay of the e-mails and the second server device installed at a system user side (information receiver) receiving the e-mails. In this system, the third server device 3 is installed at the information provider side for providing predetermined information as the e-mails. These server devices 1, 2, and 3 are mutually accessible and loginable through an internet.

The first server device 1 is formed by a mail server 4 and a Web server 5 connected to the mail server 4 through the interface. The mail server4 and the Web server 5 are a personal computer comprising a processor (not shown) and a memory (not shown). The first server device 1 is capable of transmitting the e-mails to a number of server devices existing on the network in the internet and capable of receiving the e-mails from those server devices. The first server device 1 receives information from the third server device 3 as the e-mail, and transmits the information to the second server device 2 as the e-mail. However, needless to say, the first server device 1 can transmit the e-mail to the third server device 3 and can receive the e-mail from the second server device 2.

The memory of the mail server 4 comprises a program file (not shown) where an application program in this system is stored and an inner address file 6 (mail box) for storing the mail main text within the e-mail. The memory of the Web server 5 comprises an inner address file 7 (mail box) for storing the attached files within the e-mails. In the memory of the mail server 4 and the memory of the Web server 5, are installed software (mail client) for transmitting and receiving the e-mails, and are stored the e-mail addresses of the second server device 2 and the third server device 3. The first server device 1, based on the control by an operating system stored in the program file, downloads and decodes the application program from the program file as needed, and executes each means to be described later according to the program.

The second server device 2 is formed by a mail server 8 and a client machine 9 (client) connected to the mail server 8 through the interface. The mail server 8 and the client machine 9 are a personal computer comprising a processor (not shown) and a memory (not shown). The memory of the mail server 8 has an inner address file 10 (mail box) for storing the e-mails.
In the memory of the mail server 8, is installed software (mail client) for transmitting and receiving the e-mails, and is stored the e-mail address of the first server device 1.

The third server device 3 is connected with a client machine 11 (client) through the interface. The third server device 3 and the client machine 11 are a personal computer comprising a process (not shown) and a memory (not shown). The memory of the server device 3 has an inner address file (mail box) (not shown) for storing the e-mails. In the memory of the server device 3, is installed software (mail client) for transmitting and receiving the e-mails, and is stored the e-mail address of the first server device 1. The server device 3 transmits the contents such as product purchase information, new product information, service information, event information and the like to the first server device 1 as document data, graphic data, image data, screen image data, and audio data.

Incidentally, the client machines 9 and 11 connected to the second and third server device 2 and 3 are, though not illustrated, connected with peripheral equipment such as a display, a keyboard, a printer, a scanner, and the like through the interface. The client machines 9 and 11 store the document data inputted from the keyboard and the document data and the graphic data read from the scanner, and can transmit these data as e-mails through the server device 3 and a mail server 8. Further, the client machines 9 and 11 can download and store image data, screen image data, and audio data from net AV equipment such as a digital camera, digital movie, television, and the like, and can transmit these data as e-mails through the server device 3 and the mail server 8.

For the software (mail client) installed in the server device 3 and the memories of the mail servers 4 and 8, as an example of the e-mail transmission software, SMTP (simple Mail Transfer Protocol) is used, and as an example of the e-mail receiving software, POP3 (Post Office Protocol Version 3) is used, and further, MIME (Multipurpose Internet Mail Extensions) for transmitting and receiving the e-mails of a multipart media type is used. The MIME expands the standard formats of the SMTP and the POP3, and performs transmission and reception by converting all sorts of data into texts. Here, the multipart media type is a media type comprising a plurality of attached files. For example, when the mail main text is appended with a text and attached with a file, this makes a multipart format. In the multipart media type, each part is zoned by a character string called as a [boundary].

Based on Figures 1 and 2, an explanation will be made below on an example in the case where the e-mails are transmitted from the third server device 3 to the first server device 1 or the e-mails are transmitted from the first server device 1 to the second server device 2. The information provider converts the document data, graphic data, image data, screen image data, and audio data into the attached file through the client machine 11 owned by the provider, and has an access to and logs in the first server device 1 through the third server device 3, and after that, transmits the multipart media type e-mail formed from the mail main text and a plurality of attached files through the server device 3 to the server device 1.

The first server device 1, upon receipt of an e-mail from the third server device 3, separates the e-mail into a mail main text and an attached file, while storing the attached file (separation storage means). One example of the procedure in which the server device 1 separates the e-mail into the main mail text and the attached file is such that each part is zoned by a boundary, and from the zoned part, the mail main text and the attached file are identified, and at the same time, an identifier is attached to the part representing the mail main text, and an identifier is attached to each part representing the attached file. In the server device 1, based on these identifiers, the part representing the attached file is stored into the inner address file 7 of the Web server 5.

The first server device 1, after separating the e-mail into the mail main text and the attached file, generates an URL (Uniform Resource Locator) (transfer request code) used when the second server device 2 requests the first server device 1 to transfer the attached file (code generating means). The URL is generated for every part of each attached file corresponding to the mail main text. Further, the server device 1 generates the URL, and at the same time, generates a password and account corresponding to each e-mail address for confirming if the system user is himself (or herself). The server device 1 having generated the URL, password, and account appends the URL of the part of the attached file corresponding to the mail main text to the mail main text (code writing means). The server device 1 appends the URL to the part of the mail main text, and after that, based on the identifier, stores the part representing the mail main text in the inner address file 6 of the mail server 4, and at the same time, stores the generated pass word and account in the inner address file 7 of the Web server 5.

The first server device 1 executes separation storage means, code generating means, and code appending means, and after that, transmits the mail main text appended with the URL together with the password and account to the second server device 2 (mail main text transmitting means). In the mail main text transmitting means, only the mail main text appended with the URL within the e-mail is transmitted to the server device 2, and the attached file is not transferred to the server device 2. The mail main text, password, and account are stored in the memory of the second server device 2. Incidentally, the first server device 1 removes the attached file stored in the inner address file 7 after the elapse of a predetermined period of time from its storing time (attached file removing means). Here, the predetermined period of time is referred to as after the elapse of several weeks or several months from the storing time of the attached file. The period can be freely set.

Next, based on Figure 3, one example in the case where the attached file is transferred from the first server device 1 to the client machine 9 of the second serve device 2 will be described. The system user logs in the second server device 2 from the client machine 9 owned by the user, and downloads the mail main text stored in the server device 2 from the server device 2. The mail main text together with the URL appended with the text, password, and account is displayed in the display of the client machine 9. The system user clicks the URL in case the user reads the attached file in addition to the mail main text. When the URL is clicked, the transfer request for the attached file corresponding to the URL is transmitted to the Web server 5 of the first server device 1. The Web server 5, upon receipt of the transfer request for the attached file, requests the authentication procedure to the second server device 2 for authenticating the transfer of the attached file (authentication request means). Specifically, before transferring the attached file, an authentication area for inputting the password is displayed in the display of the client machine 9. The system user inputs the password and account already received into the authentication area through the keyboard. Incidentally, the account may be set once, and after setting the account, the password only may be inputted to the authentication area. In case the inputted password is correct, the Web server 5 takes out the attached file corresponding to the URL from the inner address file 7, and download the attached file into the client machine 9 of the system user. The attached file is displayed in the display of the system user.

In this e-mail transmission system, since only the mail main text appended with the URL within the e-mail is transmitted from the first server device 1 to the second server device 2, by storing the attached file, a load of the storage capacity of the second sever device 2 can be reduced, and the amount used of the storage capacity of the second server device 2 can be restricted to the minimum necessary. In this system, a large amount of data is not intensively transmitted to the second server device 2 in a short period of time, so that the overflow of the storage capacity of the second server device 2 can be surely prevented. The system is appended with the URL of the attached file corresponding to the mail main text to the mail main text, and when the client machine 9 of the second server device 2 requests the first sever device 1 to the transfer the attached file by using the URL, the first server device 1 transfers the attached file corresponding to the mail main text to the client machine 9, and therefore, the attached file requested for the transfer can be surely read.

Further, though it takes a considerable time to download the e-mails including all the attached files from the second server device 2 into the client 9, in this system, since only the mail main text except for the attached file is downloaded to the client machine 9 from the second server device 2, the downloading time can be shortened as compared with the case where the e-mails including the attached files are downloaded.

Since the system removes the attached files stored in the first server device 1 after the elapse of a predetermined period of time from the storing time, even if a plurality of attached files are stored in the first server device 1, a load of the storage capacity of the first server device 1 by the attached files can be reduced, and the overflow of the storage capacity of the first server device 1 can be prevented. Since the system requests to the client machine 9 of the second server device 2 the authentication procedure in which the first server device 1 authenticates the transfer of the attached file, and the first server device 1 transfers the attached file to the predetermined client machine 9 having passed the authentication, the attached file is not read by the outsider other than the legitimate system user having passed the authentication.

The system may be used in a network technology such as a local area network, a wide area Ethernet (Registered Trade Mark) work, and the like in addition to the internet.

## Claims

1. An e-mail transmission system constituted by a first server device capable of transmitting and receiving an e-mail formed from a mail main text and an attached file attached to said mail main text and at least one second server device capable of transmitting and receiving said e-mail, wherein said first sever device transmits said e-mail to said second server device through a network,
said e-mail transmission system, **characterized by** comprising:
separation storage means in which said first server device separates said received e-mail into a mail main text and an attached file, while storing the attached file;
code generating means for generating a transfer request code used when the transfer of said attached file is requested to said first server device from the client connected to said second server device;
code appending means for appending the transfer request code of said attached file corresponding to the mail main text to said mail main text; and
mail main text transmitting means for transmitting said mail main text appended with said transfer request code to said second server device,
wherein, in said system, when said client requests the transfer of said attached file to said first server device by using said transfer request code, said first server device transfers said attached file corresponding to said transfer request code to said client.

2. The e-mail transmission system according to claim 1, **characterized by** comprising removing means in which said first server device removes said stored attached file after the elapse of a predetermined period of time from its storing time.

3. The e-mail transmission system according to claim 1 or 2, **characterized in that** said first server device, upon receipt of a request for transfer of said attached file from said client, comprises authentication request means for requesting the authentication procedure to said client for authenticating the transfer of said attached file.
